# FASCICULE DE BREVET EUROPEEN

(11) **EP 0 581 637 B1**
(45) Date de publication et mention de la délivrance du brevet: **06.03.1996**
(21) Numéro de dépôt: 93401816.9
(22) Date de dépôt: 13.07.1993
(51) Int. Cl.: F16K 5/04

(54) **Robinet à boisseau cylindrique**
Hahn mit Zylinderküken
Cock with cylindrical plug

(30) Priorité: 29.07.1992 FR 9209361
(43) Date de publication de la demande: 02.02.1994
(73) Titulaire: COMAP, F-69008 Lyon (FR)
(72) Inventeur: Rager, Pierre, F-45530 Vitry Aux Loges (FR)
(74) Mandataire: Maureau, Philippe

(56) Documents cités:
- FR-A- 2 563 887
- GB-A- 1 369 873
- US-A- 3 945 603
- US-A- 4 807 666
- US-A- 4 890 817

## Description

L'invention concerne les robinets à boisseau cylindrique.

Ces robinets, qui sont d'un type comme connu du document US-A-4 890 817, comprennent essentiellement :
- un corps, comportant, d'une part, une tubulure axiale débouchant au moins en deux orifices opposés d'entrée et de sortie et, d'autre part, un évidement cylindrique transversal, d'axe perpendiculaire à la tubulure axiale et traversé de part en part par cette dernière, et
- un tournant, comportant d'une part une partie d'obturation en forme de tige cylindrique, logée dans l'évidement cylindrique du corps et pourvue d'au moins un conduit traversant d'axe perpendiculaire à l'axe de la tige, et d'autre part une partie de manoeuvre émergeant latéralement du corps, de manière à permettre une rotation du tournant par rapport au corps entre une position d'ouverture, où le conduit traversant du tournant est dans l'alignement de la tubulure axiale du corps, et une position de fermeture, où ce conduit traversant, désaligné par rapport à la tubulure axiale, occulte cette dernière.

Les robinets de ce type ont une structure plus ou moins complexe selon les performances qu'ils doivent atteindre. Toutefois, même pour ceux présentant la structure la plus simple, dès qu'il est nécessaire de prévoir des moyens d'étanchéité spécifiques tels que des joints toriques ou autres, la structure et donc le montage deviennent plus compliqués ; en effet, ces joints, rapportés, doivent être soigneusement mis en place entre le corps et le tournant afin de leur permettre de jouer convenablement leur rôle. Par voie de conséquence, cette complication du montage, qui se répercute sur le dessin des pièces, grève le coût de réalisation du robinet et empêche ainsi une fabrication en très grande série à très bas prix de robinets performants.

Le but de l'invention est de pallier ces inconvénients, en proposant un robinet à boisseau cylindrique du type indiqué ci-dessus qui, bien qu'il soit pourvu de joints d'étanchéité spécifiques, ne soit constitué essentiellement que de deux pièces élémentaires au maximum, le corps et le tournant, assemblées par simple emboîtement.

A cet effet, selon l'invention, le tournant est réalisé en une matière moulée et porte des organes d'étanchéité avec le corps, ces organes d'étanchéité étant élastiquement déformables et monoblocs avec le tournant, tels que rapportés et scellés sur celui-ci ou en une seule pièce avec lui, de manière à constituer un robinet à boisseau cylindrique essentiellement à partir de deux pièces élémentaires.

Très avantageusement, ces organes d'étanchéité sont en un matériau (par exemple un matériau élastomère tel qu'un polyester élastomère thermoplastique), différent de celui du tournant (qui est par exemple en un polyacétal chargé de fibres de verre), surmoulé dans des gorges de ce dernier préalablement venues de moulage. Ils comportent notamment des joints annulaires entourant la tige cylindrique, coaxiaux avec celle-ci et disposés de part et d'autre du conduit traversant, ainsi que des joints gauches disposés à proximité de chacune des extrémités débouchantes du conduit traversant.

En variante, les organes d'étanchéité peuvent être constitués d'une succession de membranes crées à partir du matériau du tournant lui-même rendu plus souple par une faible épaisseur ou un traitement approprié.

Pour permettre un assemblage aisé du robinet, l'alésage cylindrique du corps et la tige cylindrique du tournant comportent avantageusement des moyens d'encliquetage respectifs coopérants, propres, lors du montage du tournant sur le corps, à immobiliser en translation la tige en fin d'introduction dans l'évidement.

D'autres caractéristiques et avantages de l'invention apparaîtront à la lecture de la description ci-dessous d'un exemple de réalisation, faite en référence aux dessins annexés, sur lesquels les mêmes références numériques désignent toutes des éléments semblables.

La figure 1 est une vue en coupe d'un robinet à boisseau cylindrique selon l'invention.

La figure 2 est une vue de dessus du tournant de ce robinet, considéré isolément avant surmoulage des éléments d'étanchéité.

La figure 3 est une coupe, selon la ligne III-III de la figure 2, de ce même tournant.

La figure 4 est une vue perspective de ce même tournant, mais après surmoulage des joints d'étanchéité.

La figure 5 est une vue perspective similaire à la figure 4, montrant une variante dans laquelle les joints d'étanchéité sont constitués en une seule pièce.

La figure 6 est une vue de dessus du tournant similaire à une partie de la figure 2, montrant une autre variante, dans laquelle les joints sont constitués de membranes souples.

La figure 7 est une vue en coupe similaire à une partie de la figure 3, montrant la variante de la figure 6.

La figure 8 est une vue en coupe similaire à une partie de la figure 1, montrant une variante dans laquelle le tournant comporte une lumière axiale obturée.

Sur les différentes figures, la référence 10 désigne le corps du robinet, qui peut être réalisé en une matière plastique moulée et qui comporte une tubulure axiale traversante 11, d'axe D₁, débouchant de part et d'autre du corps par deux orifices 12 d'entrée et de sortie (le sens de circulation du fluide est indifférent). Il comporte également un évidement transversal 13, cylindrique de révolution, et dont l'axe D₂ est perpendiculaire à l'axe D₁ de la tubulure 11.

Cet évidement 13 loge un tournant 20 comportant une tige cylindrique 21 venant s'ajuster dans l'évidement 13 et pourvue d'un conduit traversant 22 d'axe D₃ perpendiculaire à l'axe D₂ de la tige cylindrique. La partie émergente du tournant constitue une partie de manoeuvre, par exemple réalisée sous forme d'un levier 23, permettant de provoquer une rotation du tournant autour de l'axe D₂ entre deux positions, l'une où les axes D₁ et D₃ sont alignés et qui permet le passage du fluide, l'autre où les axes D₁ et D₃ sont désalignés, par exemple perpendiculaires, et qui vient ainsi occulter la tubulure axiale 11 et interdire le passage du fluide.

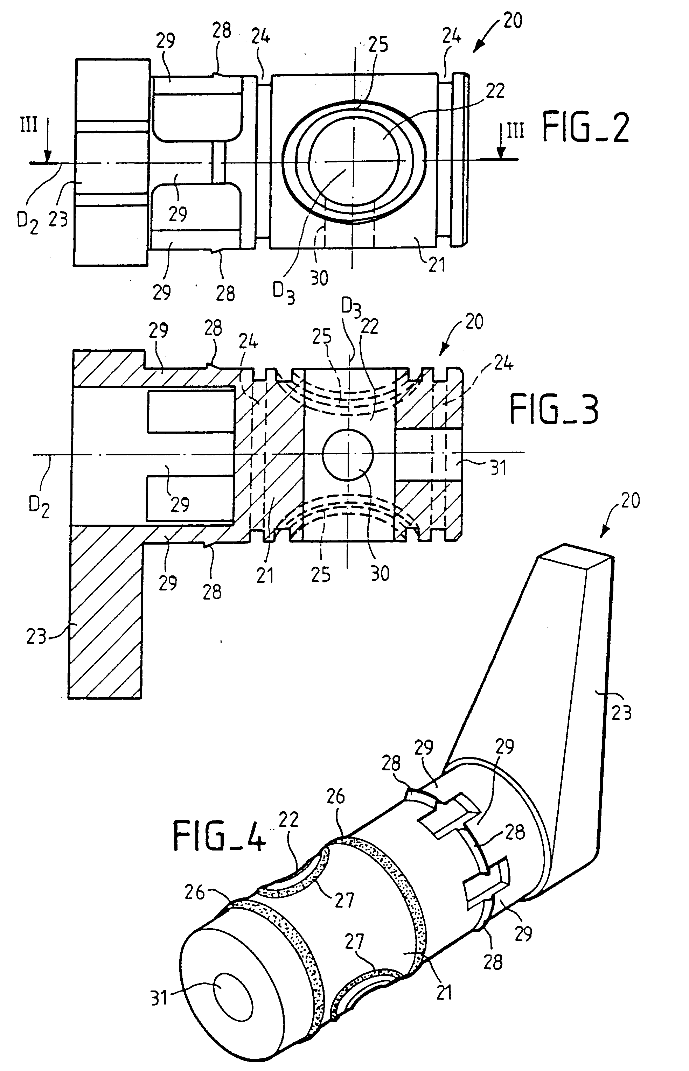

De façon caractéristique de l'invention, comme on peut le voir plus en détail sur les figures 2 à 4, le tournant 20 est muni, de part et d'autre du conduit traversant 22, de gorges annulaires 24 venues de moulage et coaxiales avec la tige 21 ; il comporte également des gorges gauches 25, venues également de moulage, disposées autour de chacune des extrémités débouchantes du conduit traversant 22. Au lieu que ces gorges soient équipées de joints rapportés amovibles (joints toriques ou autres), ce qui compliquerait le montage notamment du fait de la mise en place de ces joints dans les gorges gauches 25, on réalise en une seule pièce ou on vient placer en une seule fois, par exemple par surmoulage, des organes d'étanchéité formant joints, désignés respectivement 26 et 27 figure 4, de manière à obtenir, comme illustré sur cette même figure 4, un tournant muni de joints monoblocs, donc insusceptibles de se séparer du tournant et ne nécessitant aucune mise en place délicate, notamment pour les joints gauches 27.

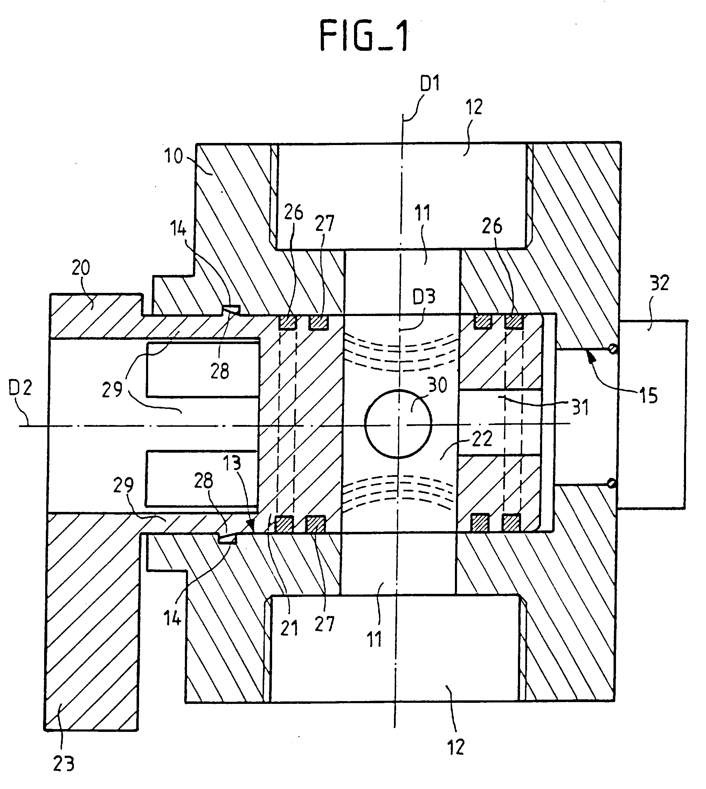

Le matériau des joints est par exemple (figures 1 à 5) un matériau élastomère, de préférence un polyester élastomère thermoplastique tel que le Hytrel (marque déposée), surmoulé sur un tournant qui, dans ce cas, peut être en polyacétal chargé, par exemple chargé à 30% de fibres de verre.

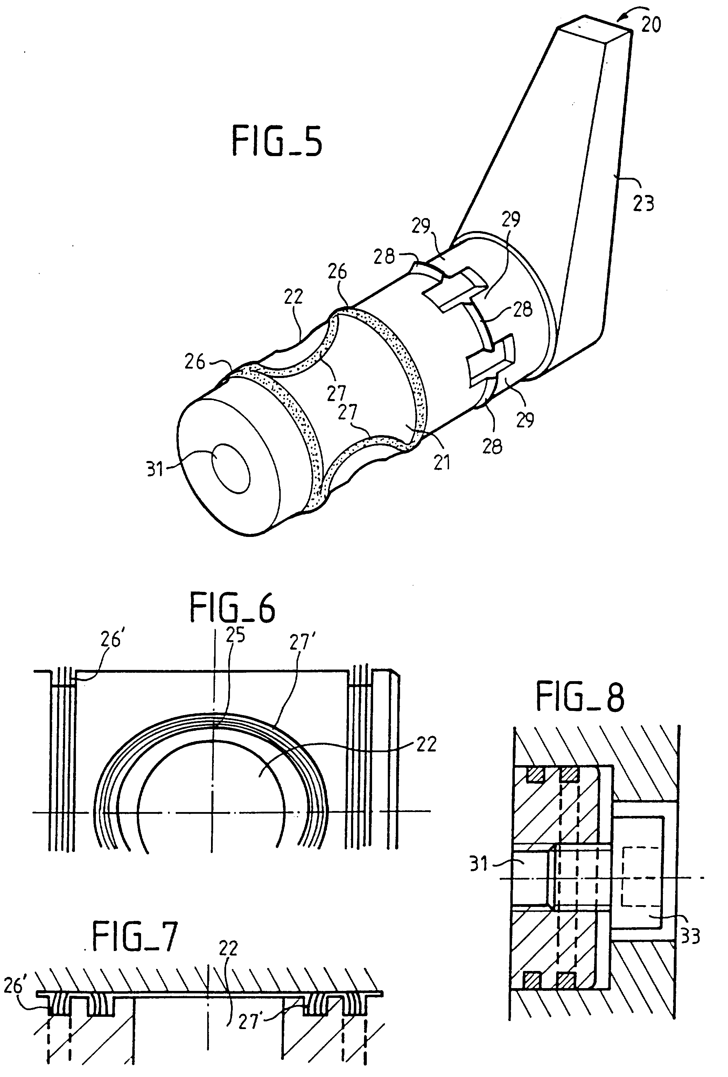

Dans le cas des figures 1 à 4, le diamètre des gorges gauches 25 est nettement inférieur à l'écartement des gorges annulaires 24, et ainsi celles-ci ne se coupent pas, et les joints correspondants 27, 26 sont distincts. En revanche, dans le cas de la figure 5, le diamètre des gorges gauches est tellement proche de l'écartement des gorges annulaires que les gorges gauches débouchent dans les gorges annulaires, et il est possible de réaliser les quatre joints 27, 26 en une seule pièce.

Le matériau des joints peut également être le même que celui du tournant, et les figures 6 et 7 montrent une forme de réalisation dans laquelle les joints sont en une seule pièce avec le tournant et constitués chacun d'une succession de membranes 26', 27' rendues souples par leur faible épaisseur ou par un traitement approprié, s'étendant radialement à partir du fond des gorges 24, 25 et dont les crêtes dépassent légèrement le haut des parois des gorges. Ainsi, lors du montage de la tige 21 du tournant 20 dans le corps 10, les membranes ploient légèrement tandis qu'une zone de leur crête, tout autour du tournant en ce qui concerne les gorges annulaires, et tout autour du conduit traversant 22 en ce qui concerne les gorges gauches, reste en contact de la paroi de l'évidement 13 du corps, ce qui assure l'étanchéité.

Pour permettre son montage dans le corps par simple emboîtement, la tige porte des ergots d'encliquetage 28 coopérant avec au moins une gorge annulaire intérieure 14 (figure 1) formée dans l'évidement 13 du corps 10. Pour permettre une déformation élastique suffisante lors de l'introduction de la tige dans le corps et avant encliquetage des ergots 28, ces ergots peuvent être par exemple réalisés sous la forme d'une saillie annulaire de préférence discontinue (figure 4) formée sur des parties 29 de la tige dans une région creuse de celle-ci et séparées par des évidements.

Subsidiairement, le tournant peut comporter dans la paroi du conduit traversant 22 une lumière transversale 30 permettant d'assurer un équilibrage des pressions lors de la fermeture du robinet. Le tournant peut également comporter une lumière axiale 31, et dans ce cas le corps, s'il comporte une ouverture telle que 15 en vis-à-vis de cette lumière axiale, devra être fermé par un bouchon 32 muni d'une tête pouvant être saillante hors du corps (figure 1). En variante (figure 8), la lumière axiale 31 est munie d'un taraudage et est obturée par un bouchon 33 embarqué sur le tournant, sous la forme d'une vis dont le corps est vissé dans le taraudage du tournant et dont la tête, en vue de son actionnement, est par exemple munie d'une empreinte telle qu'une empreinte carrée.

On notera toutefois que ces caractéristiques ne sont aucunement indispensables à la structure de robinet selon l'invention, qui ne comporte essentiellement que deux pièces indépendantes, à savoir le corps 10 et le tournant 20 pourvu de ses joints monoblocs, surmoulés 26 et 27 ou en une seule pièce 26', 27' par exemple.

## Revendications

1. Robinet à boisseau cylindrique, comprenant :
- un corps (10), comportant, d'une part, une tubulure axiale (11) débouchant en deux orifices opposés (12) d'entrée et de sortie et, d'autre part, un évidement cylindrique transversal (13), d'axe (D₂) perpendiculaire à la tubulure axiale et traversé de part en part par cette dernière, et
- un tournant (20), comportant d'une part une partie d'obturation en forme de tige cylindrique (21), logée dans l'évidement cylindrique du corps et pourvue d'un conduit traversant (22) d'axe (D₃) perpendiculaire à l'axe (D₂) de la tige, et d'autre part une partie de manoeuvre (23) émergeant latéralement du corps, de manière à permettre une rotation du tournant par rapport au corps entre une position d'ouverture, où le conduit traversant du tournant est dans l'alignement de la tubulure axiale du corps, et une position de fermeture, où ce conduit traversant, désaligné par rapport à la tubulure axiale, occulte cette dernière,
caractérisé en ce que le tournant est réalisé en une matière moulée et porte des organes (26, 27) d'étanchéité avec le corps, ces organes d'étanchéité étant élastiquement déformables et monoblocs avec le tournant, tels que rapportés et scellés sur celui-ci ou en une seule pièce avec lui, de manière à constituer un robinet à boisseau cylindrique essentiellement à partir de deux pièces élémentaires.

2. Robinet à boisseau cylindrique selon la revendication 1, caractérisé en ce que les organes d'étanchéité (26, 27) sont en un matériau différent de celui du tournant, surmoulé dans des gorges (24, 25) de ce dernier préalablement venues de moulage.

3. Robinet à boisseau cylindrique selon la revendication 2, caractérisé en ce que les organes d'étanchéité (26, 27) sont en une seule pièce.

4. Robinet à boisseau cylindrique selon la revendication 1, caractérisé en ce que les organes d'étanchéité (26', 27') sont en une seule pièce avec le tournant et réalisés sous la forme de membranes souples.

5. Robinet à boisseau cylindrique selon la revendication 2, caractérisé en ce que le matériau des organes d'étanchéité est un matériau élastomère.

6. Robinet à boisseau cylindrique selon la revendication 4, caractérisé en ce que les organes d'étanchéité sont réalisés dans le même matériau que le tournant, mais ayant subi un traitement élastifiant.

7. Robinet à boisseau cylindrique selon la revendication 5, caractérisé en ce que le matériau élastomère est un polyester élastomère thermoplastique.

8. Robinet à boisseau cylindrique selon la revendication 7, caractérisé en ce que le matériau du tournant sur lequel sont surmoulés les organes d'étanchéité est un polyacétal chargé de fibres de verre.

9. Robinet à boisseau cylindrique selon la revendication 1, caractérisé en ce que les organes d'étanchéité comportent des joints annulaires (26) entourant la tige cylindrique, coaxiaux avec celle-ci et disposés de part et d'autre du conduit traversant.

10. Robinet à boisseau cylindrique selon la revendication 1, caractérisé en ce que les organes d'étanchéité comportent des joints gauches (27) disposés à proximité de chacune des extrémités débouchantes du conduit traversant.

11. Robinet à boisseau cylindrique selon la revendication 1, caractérisé en ce que l'alésage cylindrique du corps et la tige cylindrique du tournant comportent des moyens d'encliquetage respectifs coopérants (14, 28) propres, lors du montage du tournant sur le corps, à immobiliser en translation la tige en fin d'introduction dans l'évidement.

12. Robinet à boisseau cylindrique selon la revendication 1, caractérisé en ce que le tournant comporte une lumière axiale (31) et le corps une ouverture (15) en regard qui est fermée par un bouchon (32).

13. Robinet à boisseau cylindrique selon la revendication 1, caractérisé en ce que le tournant comporte une lumière axiale (31) munie d'un taraudage dans lequel est vissé un bouchon (33).

## Patentansprüche

1. Hahn mit Zylinderküken,
beinhaltend ein Gehäuse (10), das zum einen einen rohrförmigen, axialen Durchlaß (11), der in zwei gegenüberliegende Einlaß- und Auslaßöffnungen (12) mündet, und zum anderen eine querverlaufende zylindrische Tasche (13) mit einer rechtwinklig zum axialen Durchlaß angeordneten Achse (D2) aufweist, wobei der Durchlaß von einer Seite zur anderen der Tasche verläuft,
ein Drehteil (2), das zum einen ein Verschlußteil in Form eines zylindrischen Schaftes, der in der zylindrischen Tasche des Gehäuses angeordnet und mit einem querverlaufenden Durchlaß (22) mit einer rechtwinklig zur Schaftachse verlaufenden Achse (D3) versehen ist, und zum anderen einen Betätigungshebel (23) aufweist, der seitlich aus dem Gehäuse vorsteht, so daß eine Drehung des Drehteils in Bezug auf das Gehäuse zwischen einer Öffnungsposition, in der der querverlaufende Durchlaß in einer Flucht mit dem axialen Durchlaß des Gehäuses liegt und einer Verschlußposition, in der der querverlaufende Durchlaß im Bezug auf den axialen Durchlaß nicht mit diesem fluchtend ihn verschließt, möglich ist, **dadurch gekennzeichnet**, daß das Drehteil aus einem gegossenen Material hergestellt ist und Dichtungsmittel (26, 27) zum Gehäuse besitzt, wobei diese Dichtungsmittel elastisch verformbar und einstückig mit dem Drehteil ausgeführt sind, sei es, daß sie in das Drehteil eingesetzt und mit diesem verklebt sind oder einteilig mit diesem ausgebildet sind, so daß ein im wesentlichen aus zwei Elementen bestehender Hahn mit Zylinderküken gebildet ist.

2. Hahn mit Zylinderküken gemäß Anspruch 1, **dadurch gekennzeichnet, daß** die Dichtungsmittel (26, 27) aus einem anderen Material als demjenigen des Drehteiles gefertigt sind, wobei sie in Rillen (24, 25) des Drehteiles, welches zuvor gegossen wurde, eingegossen sind.

3. Hahn mit Zylinderküken gemäß Anspruch 2, **dadurch gekennzeichnet, daß** die Dichtungsmittel (26, 27) aus einem einzigen Teil bestehen.

4. Hahn mit Zylinderküken gemäß Anspruch 1, **dadurch gekennzeichnet, daß** die Dichtungsmittel (26', 27') einstückig mit dem Drehteil und in Form von biegsamen Membranen ausgebildet sind.

5. Hahn mit Zylinderküken gemäß Anspruch 2, **dadurch gekennzeichnet, daß** das Material der Dichtungsmittel ein Elastomer ist.

6. Hahn mit Zylinderküken gemäß Anspruch 4, **dadurch gekennzeichnet, daß** die Dichtungsmittel aus dem gleichen Material wie das Drehteil, jedoch mit einer elastischen Formgebung versehen ausgebildet sind.

7. Haahn mit Zylinderküken gemäß Anspruch 5, **dadurch gekennzeichnet, daß** das Elastomer ein thermoplastisches Polyesterelastomer ist.

8. Hahn mit Zylinderküken gemäß Anspruch 7, **dadurch gekennzeichnet, daß** das Material des Drehteiles, auf das die Dichtungsmittel aufgegossen sind, ein glasfaserverstärktes Polyacetat ist.

9. Hahn mit Zylinderküken gemäß Anspruch 1, **dadurch gekennzeichnet, daß** die Dichtungsmittel um den zylindrischen Schaft umlaufende Dichtungen (26) beinhalten, die koaxial zu diesem und beidseitig des querverlaufenden Durchlasses angeordnet sind.

10. Hahn mit Zylinderküken gemäß Anspruch 1, **dadurch gekennzeichnet, daß** die Dichtungsmittel bogenförmig verlaufende Dichtungen (27) aufweisen, die jeder der beiden Endungsöffnungen des querverlaufenden Durchlaß benachbart angeordnet sind.

11. Hahn mit Zylinderküken gemäß Anspruch 1, **dadurch gekennzeichnet, daß** die zylindrische Bohrung des Gehäuses und der zylindrische Schaft des Drehteiles Verrastungsmittel aufweisen, die bei der Montage des Drehteiles im Gehäuse beiderseitig tadellos ineinandergreifen (14, 28), so daß eine Verschiebung des Schaftes am Ende des Einschiebens in die Tasche des Gehäuses verhindert wird.

12. Hahn mit Zylinderküken gemäß Anspruch 1, **dadurch gekennzeichnet, daß** das Drehteil einen axialen Kanal (31) und das Gehäuse eine ihm gegenüberliegende Öffnung, die durch einen Stopfen (32) verschlossen ist, aufweist.

13. Hahn mit Zylinderküken gemäß Anspruch 1, **dadurch gekennzeichnet, daß** das Drehteil einen axialen Kanal (31) aufweist, der mit einem Innengewinde versehen ist, in das ein Stopfen (33) eingeschraubt ist.

## Claims

1. Cock with cylindrical plug comprising:
- a body (10) including, on the one hand, an axial pipe (11) emerging in two opposed, inlet and outlet, orifices (12) and, on the other hand, a transverse cylindrical recess (13) of axis (D₂) perpendicular to the axial pipe and right through which the latter passes, and
- a key (20) including on the one hand a shut-off part in the form of a cylindrical rod (21) housed in the cylindrical recess of the body and provided with a through-duct (22) of axis (D₃) perpendicular to the axis (D₂) of the rod, and on the other hand an operating part (23) emerging laterally from the body, so as to allow the key to be rotated with respect to the body between an open position in which the through-duct of the key is aligned with the axial pipe of the body, and a closed position in which this through-duct, misaligned with respect to the axial pipe, closes the latter off,
characterized in that the key is made from a moulded material and carries members (26, 27) for sealing with the body, these sealing members being elastically deformable and integral with the key, for example attached and sealed onto it, or as a single piece with it, so as to constitute, essentially from two elemental components, a cock with cylindrical plug.

2. Cock with cylindrical plug according to Claim 1, characterized in that the sealing members (26, 27) are made of a material different from that of the key, overmoulded in grooves (24, 25) of the latter which have been formed integrally beforehand by moulding.

3. Cock with cylindrical plug according to Claim 2, characterized in that the sealing members (26, 27) are as a single piece.

4. Cock with cylindrical plug according to Claim 1, characterized in that the sealing members (26', 27') are as a single piece with the key and made in the form of flexible diaphragms.

5. Cock with cylindrical plug according to Claim 2, characterized in that the material of the sealing members is an elastomer material.

6. Cock with cylindrical plug according to Claim 4, characterized in that the sealing members are made from the same material as the key, but having undergone an elasticizing treatment.

7. Cock with cylindrical plug according to Claim 5, characterized in that the elastomer material is a thermoplastic elastomer polyester.

8. Cock with cylindrical plug according to Claim 7, characterized in that the material of the key onto which the sealing members are overmoulded is a polyacetal filled with glass fibres.

9. Cock with cylindrical plug according to Claim 1, characterized in that the sealing members include annular seals (26) surrounding the cylindrical rod, coaxial with it and arranged on either side of the through-duct.

10. Cock with cylindrical plug according to Claim 1, characterized in that the sealing members include ovalized seals (27) arranged close to each of the emerging ends of the through-duct.

11. Cock with cylindrical plug according to Claim 1, characterized in that the cylindrical bore of the body and the cylindrical rod of the key include respective interacting snap-fitting means (14, 28) capable, when the key is fitted on the body, of immobilizing the rod in terms of translation at the end of insertion into the recess.

12. Cock with cylindrical plug according to Claim 1, characterized in that the key includes an axial port (31) and the body an opening (15) facing it which is closed by a stopper (32).

13. Cock with cylindrical plug according to Claim 1, characterized in that the key has an axial port (31) provided with a tapping into which a stopper (33) is screwed.
